# EUROPÄISCHE PATENTSCHRIFT

(11) **EP 4 018 542 B1**
(45) Veröffentlichungstag und Bekanntmachung des Hinweises auf die Patenterteilung: **31.01.2024**
(21) Anmeldenummer: 21711518.7
(22) Anmeldetag: 09.03.2021
(51) Int. Cl.: H02P 3/08

(54) **STEUEREINHEIT ZUM STEUERN EINES MOTORS UND VERFAHREN**
CONTROL UNIT FOR CONTROLLING A MOTOR AND METHOD
UNITÉ DE COMMANDE POUR COMMANDER UN MOTEUR ET PROCÉDÉ

(30) Priorität: 13.08.2020 DE 102020121317
(43) Veröffentlichungstag der Anmeldung: 29.06.2022
(73) Patentinhaber: Marquardt GmbH, 78604 Rietheim-Weilheim (DE)
(72) Erfinder: PETROU, Efstratios, 78467 Konstanz (DE); WU, Guanwei, Shanghai 200123 (CN)
(74) Vertreter: Staeger & Sperling Partnerschaftsgesellschaft mbB
(86) Internationale Anmeldenummer: PCT/EP2021/055871
(87) Internationale Veröffentlichungsnummer: WO 2022/033725

(56) Entgegenhaltungen:
- EP-A2- 1 760 874
- EP-A2- 2 854 283
- DE-A1-102018 122 837

## Beschreibung

Diese Erfindung betrifft eine Steuereinheit zum Steuern eines Motors, insbesondere zur Kommutierung eines Motors und auf ein Verfahren zur Steuerung eines Motors sowie ein Gerät umfassend eine solche Steuereinheit.

Konventionell werden motorbetriebene Geräte zum Beispiel durch bürstenbehaftete Permanentmagnet (PM)-Motoren angetrieben, die Gleichstrom von einer Energiequelle oder entsprechend von einem Wandler umgewandelten Wechselstrom erhalten.

Ein solcher Motor hat einen direkten Einfluss auf viele der Betriebseigenschaften des motorbetriebenen Geräts, wie z. B. das Ausgangsdrehmoment, die Lebensdauer, Laufeigenschaften usw..

Das Ausgangsdrehmoment bezieht sich auf die Fähigkeit des elektromotorbetriebenes Geräts, unter größeren Lasten zu arbeiten, ohne dass es zum Stillstand kommt. Die Betriebsdauer eines elektromotorbetriebenen Geräts, das von einem Akku betrieben wird, ist stark von der Energieeffizienz des Motors beeinflusst. Wünschenswert ist demnach eine hohe Energieeffizienz des Motors. Die Lebensdauer eines entsprechenden Geräts wird von vielen Faktoren beeinflusst, unter anderem auch von der Art und Bauweise des Motors, der für die Umwandlung von elektrischer in mechanische Leistung verwendet wird.

Bürstenmotoren wie die PM-Bürstenmotoren, die im Allgemeinen in Geräteanwendungen eingesetzt werden, sind anfällig für eine Beschädigung der Bürsten über die Zeit. Die wichtigste mechanische Eigenschaft, die bürstenlose Permanentmagnet-Motoren von bürstenbehafteten Permanentmagnet-Motoren unterscheidet, ist die Art der Kommutierung des Motors. Bei einem bürstenbehafteten PM-Motor wird die Kommutierung mechanisch über einen Kommutator und ein Bürstensystem erreicht. Bei einem bürstenlosen Gleichstrommotor hingegen wird die Kommutierung elektronisch durch die Steuerung des Stromflusses zu den Statorwicklungen erreicht.

Ein bürstenloser Gleichstrommotor umfasst einen Rotor zur Bereitstellung von Rotationsenergie und einen Stator zur Bereitstellung eines Magnetfeldes, das den Rotor antreibt. Der Rotor besteht aus einer Welle, die von einem Lagersatz auf jeder Seite gelagert wird und der von einem Permanentmagneten (PM) umgeben ist, der ein Magnetfeld erzeugt. Der Statorkern ist um den Rotor herum montiert, wobei an allen Punkten mit Ausnahme der Schnittstelle des Lagersatzes ein Luftspalt aufrechterhalten wird.

Jede der Wicklungen ist typischerweise je nach Konfiguration so ausgerichtet, dass sie parallel zur Rotorwelle liegt. Ferner sind zur Kommutierung sogenannte Leistungsbauelemente wie MOSFETs vorgesehen, die mit jeder Wicklung geschaltet sind, um eine selektive Leistungseinspeisung je Wicklung zu ermöglichen. Wenn Strom an eine Wicklung angelegt wird, erzeugt der resultierende Strom in der Wicklung ein magnetisches Feld, das an den Rotor koppelt. Das mit dem Permanentmagneten in der Rotorbaugruppe verbundene Magnetfeld versucht, sich mit dem vom Stator erzeugten Magnetfeld auszurichten, was zu einer Drehbewegung des Rotors führt. Ein wesentliches Element dabei stellt die Steuerung dar, um die Kommutierung nach einem bestimmten Kommutierungsmuster vorzunehmen.

Ein Steuerkreis aktiviert nacheinander die einzelnen Statorspulen, so dass das am Rotor befestigte PM kontinuierlich das von den Statorwicklungen erzeugte fortschreitende Magnetfeld treibt. Ein Satz von Abtastmagneten, die an die PMs in der Rotorbaugruppe gekoppelt sind, werden von einem Sensor, z.B. einem Hall-Effekt-Sensor, abgetastet, um die aktuelle Position der Rotorbaugruppe zu identifizieren.

Das korrekte Timing der Kommutierungssequenz wird durch die Überwachung von Sensoren, die auf der Rotorwelle montiert sind, oder durch die Erkennung von Magnetfeldspitzen oder -nullpunkten, die mit den PMs verbunden sind, aufrechterhalten.

Ein solcher bürstenloser Motor bietet viele Vorteile gegenüber herkömmlichen bürstenbehafteten Motoren. Konventionelle bürstenbehaftete Motoren sind aufgrund des Verschleißes der Bürsten wesentlich weniger langlebig als bürstenlose Motoren. Da die Kommutierung über einen Mikrocontroller abgewickelt wird, werden mechanische Ausfälle im Zusammenhang mit der Kommutierung minimiert und die Ausfallbedingungen verbessert. Außerdem sind bürstenbehaftete Motoren aufgrund der Reibung und der mit den Bürsten und dem Kommutator verbundenen Wärme weniger effizient als bürstenlose Motoren.

Die Verwendung eines Reglers für die Steuerung von motorbetriebenen Geräten, die auf herkömmliche Weise mechanisch erfolgen, stellt jedoch eine spezielle Herausforderung dar. Während z.B. Motoren von Geräten konventionell mechanisch gebremst wurden, wenn das motorbetriebenes Gerät abgeschaltet oder der Auslöser vom Benutzer losgelassen wurde, kann das elektronische Abbremsen bürstenloser Motoren über einen Controller problematisch sein, insbesondere weil beim Abschalten des motorbetriebenes Geräts der Controller automatisch abgeschaltet wird.

Darüber hinaus kann es manchmal schwierig sein, die Rotation des Rotors mit der vom Regler gesteuerten sequentiellen Kommutierung zu synchronisieren.

Aus der Druckschrift US 2010/0194315 A ist ein von einem Motor angetriebenes Werkzeug und ein Verfahren zur Steuerung eines Motors bekannt, wobei ein optimiertes Bremskonzept dort nicht offenbart ist.

Die EP 0 578 366 A2 offenbart eine kontrollierte Bremsvorrichtung für Elektromotoren und insbesondere tragbare Elektrowerkzeuge. Aus der EP 1 318 596 A2 ist eine Motorantriebsvorrichtung und eine Motorantriebsmethode bekannt.

Die Druckschrift US-A-2002/0127115 beschreibt eine Pumpe mit Mitteln zum Aktivieren einer dynamischen Bremse, wenn die Pumpe unter einer vordefinierten Pumpendrehzahl abbremst.

Aus der EP 2520397 A1 ist eine weitere Lösung eines motorbetriebenen Werkzeugs bekannt.

Weiter ist aus der EP 1 760 874 A2 bereits eine Steuervorrichtung für ein Gerät mit bürstenlosen Motor bekannt, welches zum Ausschalten des Geräts die Drehzahl des Motors erfasst und das Gerät über ein Relais abschaltet, wenn die Drehzahl auf Null gefallen ist.

Die DE102018122837A1 beschreibt ein Bremsverfahren für einen elektronisch kommutierten bürstenlosen Motor mit gespeicherten Motoraus- oder Wartezeiten, während denen der Motor antriebslos ist und die vor dem eigentlichen Bremsvorgang liegen.

Die Aufgabe der vorliegenden Erfindung besteht darin, die im Stand der Technik in diesem Zusammenhang bekannten Nachteile zu überwinden oder zumindest zu verbessern und eine optimierte Steuereinheit bereit zu stellen, die des Abbremsens des Motors bei einem bürstenlosen, kommutierten Motor zuverlässig und kostengünstig realisieren kann.

Die Erfindung ist in den unabhängigen Ansprüchen definiert.

Ein weiterer Aspekt der vorliegenden Erfindung betrifft ein motorbetriebenes Werkzeug (Elektrowerkzeug), welches gemäß dem erfinderischen Konzept betrieben und insbesondere gebremst werden kann.

Erfindungsgemäß wird hierzu eine Steuereinheit für ein motorbetriebenes Gerät vorgeschlagen aufweisend: einen bürstenlosen Motor, eine Stromversorgung, eine Bedieneinheit, die von einem Nutzer aktivierbar ist, wobei die Steuereinheit zumindest zum Steuern der Kommutierung des Motors durch mehrere an die Stromversorgung angeschlossene Leistungsschalter ausgebildet ist und die für eine drehzahl-abhängige Zeit nach dem Detektieren eines bestimmten Positionssensor- bzw. Hall-Sensor-Signal-Zustands zunächst eingeschaltet und aktiv bleibt, wobei der Hall-Sensor-Signal-Zustand indikativ dafür ist, dass der Motor komplett gestoppt ist und das Ausschalten des Elektrowerkzeugs initiiert werden soll.

Insofern ist die Steuerung ausgebildet zum Initiieren einer elektronischen (d. h. insbesondere nicht mechanischen) Bremsung des Motors, wobei die Steuereinheit während einer jeweils Drehzahl-abhängigen Zeitdauer t_{D} nach dem Erkennen eines bestimmten Positionssensorzustands deaktiviert, d. h. ausschaltet und bis dahin in einem aktiven eingeschalteten Betriebszustand hält und davon abhängig ein Steuerungsmittel vorgesehen ist, danach das Ausschalten des Geräts automatisiert zu initiieren.

In einer vorteilhaften Ausführungsform der Erfindung stellt der Positionssensor einen Hall-Sensor dar, der an die Steuereinheit ein Signal, welches indikativ für den Zustand des Motors ist, überträgt.

Erfindungsgemäß ist ein Speicher vorgesehen, in dem Sollwerte für die Drehzahl-abhängigen Zeitdauer t_{D} für eine Vielzahl von Motordrehzahlen über den gesamten Motordrehzahlbereich hinterlegt sind. Weiter kann nach Ablauf der Zeitdauer to die Ist-Drehzahl (vorzugsweise erfasst durch den Hall-Sensor) erfasst und geprüft werden, ob diese größer Null ist und sich demnach der Motor noch dreht, wobei in diesem Fall der im Speicher für diese Drehzahl hinterlegte Sollwert um einen vorbestimmten Faktor erhöht wird.

In einer ebenfalls vorteilhaften Ausführungsform der Erfindung ist vorgesehen, dass die mehreren Leistungsschalter mehrere High-Side-Schalter aufweisen, die mit entsprechend mehreren Low-Side-Schaltern verbunden sind, und die Steuereinheit für ein abwechselndes EIN- und AUS-Schalten der mehreren Low-Side-Schalter und der mehreren High-Side-Schalter zum Bremsen des Motors konfiguriert ist.

Eine weitere bevorzugte Ausgestaltung der Erfindung sieht vor, dass die Bedieneinheit einen EIN/AUS-Schalter aufweist, der sowohl manuell bedienbar ist als auch mittels der Steuerung bei Eintreten einer Abschaltbedingung betätigbar ist.

In einer weiteren bevorzugten Ausgestaltung der Erfindung ist vorgesehen, dass zwischen der Stromversorgung und der Steuereinheit ein Stromkontakt, der, wenn der der EIN/AUS-Schalters ausgeschaltet wurde zur Bereitstellung von Strom zur Steuereinheit während der Drehzahl-abhängigen Zeitdauer t_{D} vorgesehen ist.

Ebenfalls von Vorteil ist es, wenn die Steuerung so konfiguriert ist, dass diese unmittelbar bei dem Ausschalten des EIN/AUS-Schalters die dann aktuelle Drehzahl erfasst und daraus die Verzögerung des Ausschaltens über die Zeitdauer to gesteuert wird und das Gerät erst dann ausgeschaltet wird.

Weiter ist es mit Vorteil vorgesehen, dass die Zeitdauer t_{D} bis zum tatsächlichen Trennen der Stromversorgung um diejenige Zeitspanne verlängert wird, die für diejenige Drehzahl detektiert wird, die nach dem Ablauf der zunächst für die Drehzahl hinterlegte Zeitdauer t_{D} hinterlegt war. Dieser Vorgang wird sukzessive solange wiederholt, bis der Motor tatsächlich still steht. Gleichzeitig werden die sich dann als fehlerhaft erwiesenen Zeitspannen to korrigiert, und zwar um die von der Steuerung erfassten kumulierten Zeiträume ggf. bis zum tatsächlichen Motorstillstand.

In einer weiteren bevorzugten Ausgestaltung der Erfindung ist vorgesehen, dass wobei die Steuerung einen Energiespeicher, vorzugsweise einen Kondensator aufweist, in der eine bestimmte elektrische Energiemenge gespeichert ist, die ausreicht die Energieversorgung für eine bestimmte Zeitspanne bereit zu stellen.

In einer ebenfalls bevorzugten Ausgestaltung der Erfindung ist vorgesehen, dass die Stromversorgung der Steuerung nach dem Ausschalten des EIN/AUS-Schalters mittels einer vorbestimmten Entladezeit mittels der gespeicherten Energie im Kondensator gesteuert wird, in der eine bestimmte elektrische Energiemenge gespeichert ist, die ausreicht die Energieversorgung für eine bestimmte Zeitspanne bereit zu stellen.

Eine weitere bevorzugte Ausgestaltung sieht vor, dass die Steuereinheit einen programmierbaren Mikrocontroller oder Mikroprozessor aufweist, die Stromversorgung eine Batterie und die mehreren Stromschalter Feldeffekttransistoren sind.

Ein weiterer Aspekt der vorliegenden Erfindung betrifft ein Verfahren zum Steuern eines Motors eines Gerätes, wie z. B. eines Elektrowerkzeugs mit den folgenden Schritten:
a) Initiieren eines Abschaltbefehls des Gerätes;
b) Erfassen der Drehzahl des Motors zu diesem Zeitpunkt;
c) Ermitteln einer in einem Speicher hinterlegten Haltedauer, nämlich einer für die ermittelte Drehzahl hinterlegte Zeitspanne t_{D}
d) Steuern eines Bremsvorgangs während der Zeitspannen to mittels Kommutieren des Motors über ein Steuergerät, insbesondere über das zuvor beschriebene Steuergerät mittels mehrerer Stromschalter, die mit einer Stromversorgung verbunden sind
e) Aufrechterhalten des aktiven eingeschalteten Betriebszustandes während dieser Zeitspanne t_{D}
f) Abschalten des Gerätes.

Der Schritt f) umfasst das Trennen der Steuerung von einer Stromversorgung.

In einer bevorzugten Ausgestaltung des erfindungsgemäßen Verfahrens ist vorgesehen, dass vor dem Schritt f) kontinuierlich die Drehzahl erfasst wird und der Schritt f) erst dann erfolgt, wenn eine bestimmte Drehzahl erreicht ist oder die Drehzahl Null ist und damit feststeht, dass der Stillstand des Motors erreicht ist. Andernfalls werden die Schritte b) bis e) wiederholt, insbesondere sukzessive wiederholt, solange bis der Stillstand des Motors detektiert wurde. Dann erfolgt zeitlich versetzt zum Schritt a) erst das tatsächliche Abschalten des Gerätes.

Ein Beispiel betrifft ein Elektrowerkzeug aufweisend eine wie zuvor beschriebene Steuerung.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine schematische Darstellung einer Ausführungsform einer erfindungsgemäßen Konfiguration einer Motorsteuerung
- Fig. 2: eine beispielhafte Schaltungsanordnung.

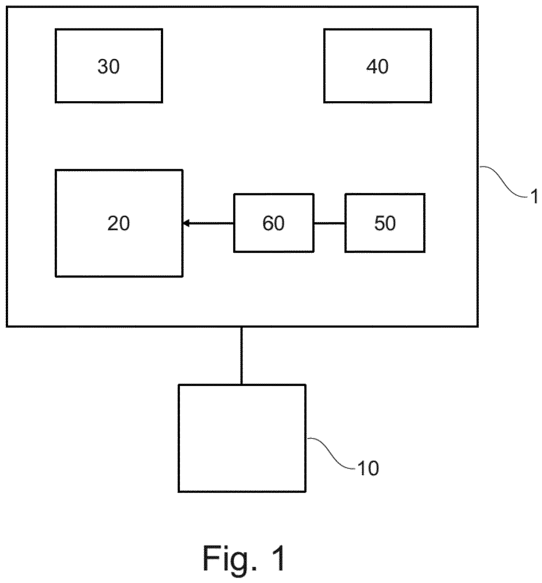

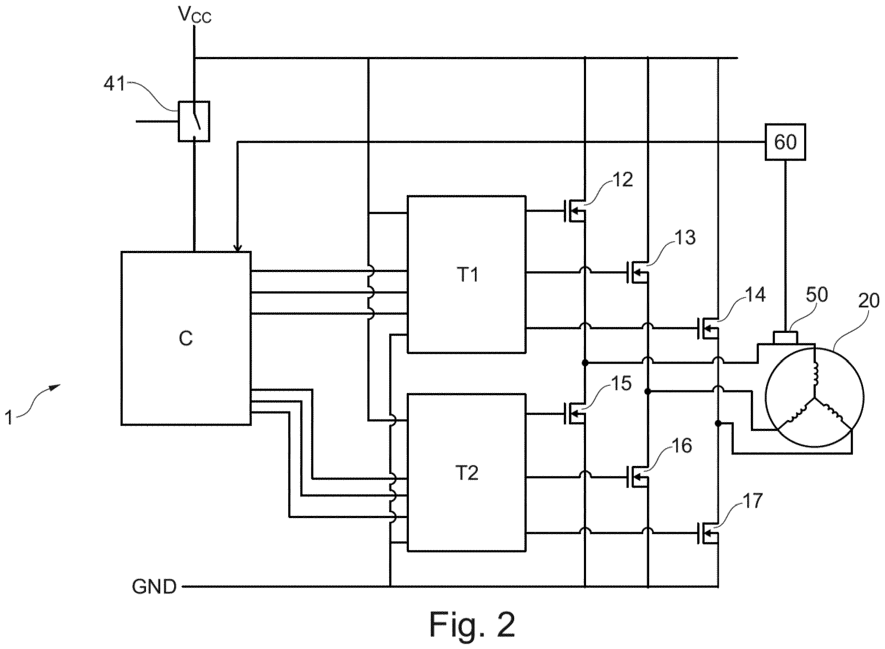

Im Folgenden wird die Erfindung anhand einer beispielhaften Ausführungsform mit Bezug auf die Figuren 1 und 2 näher beschrieben, wobei gleiche Bezugszeichen auf gleiche funktionale und/oder strukturelle Merkmale hinweisen und

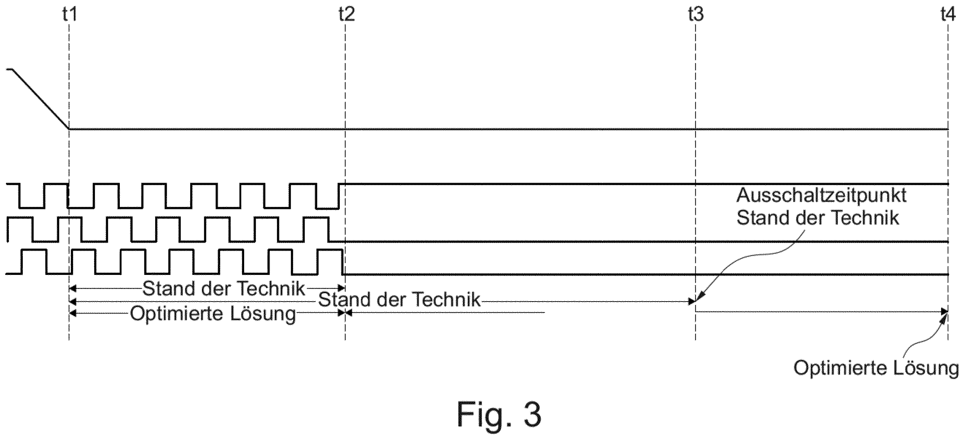

Fig. 3 einen schematischen Kommutierungsverlauf beim Abschalten (einmal gemäß Stand der Technik und einmal gemäß der vorliegenden Erfindung.

Die Figur 1 zeigt eine schematische Darstellung einer Ausführungsform einer erfindungsgemäßen Konfiguration einer Motorsteuerung mittels einer Steuereinheit 1 für ein motorbetriebenes Gerät 10. Die Steuereinheit 1 umfasst einen bürstenlosen Motor 20, eine Stromversorgung 30 und eine Bedieneinheit 40. Das Gerät 10 und dessen Stromversorgung ist über einen EIN/AUS Schalter 41 an der Bedieneinheit 40 von einem Nutzer aktivierbar.

Da bei den aus dem Stand der Technik bekannten Lösungen die Steuereinheit deaktiviert wird, sobald das Gerät 10 mittels der Bedieneinheit 40 ausgeschaltet wird, kann ein sich in diesem Zeitpunkt drehender Motor nicht mehr elektronisch gesteuert gebremst werden. Hierzu sieht die beispielhaft dargestellte Ausführungsform der Erfindung vor, dass die Steuereinheit 1 zur Kommutierung des Motors 20 beim Bremsvorgang mehrere, wie in der Schaltungsanordnung der Figur 2 gezeigt, an die Stromversorgung angeschlossene Leistungsschalter 12, 13, 14, 15, 16, 17 aufweist.

Nach dem Initiieren einer elektronischen Bremsung des Motors 20 deaktiviert die Steuereinheit 1 während einer jeweils Drehzahl-abhängigen Zeitdauer tD erst dann, nachdem der Motorstillstand mittels des Positionssensors 50 erfasst wurde.

Bis dahin bleibt die Steuereinheit 1 bestimmungsgemäß in einem aktiven eingeschalteten Betriebszustand. Das Steuerungsmittel 60 ist vorgesehen danach das Ausschalten des Geräts 10 automatisiert zu initiieren.

Der in der Figur 1 dargestellte Positionssensor 50 ist bei diesem Ausführungsbeispiel einen Hall-Sensor. Ferner ist ein Speicher 51 vorgesehen. Dieser speichert die Sollwerte tD,SOLL für die Drehzahl-abhängigen Zeitdauer tD für unterschiedliche Motordrehzahlen im zulässigen Motordrehzahlbereich des Motors 20.

In der Ausführungsform, wie in Fig. 2 dargestellt, ist ein Steuerungsmittel 60 vorgesehen. Das Steuerungsmittel 60 führt eine bestimmungsgemäße Verzögerung zwischen dem Abschaltbefehl des EIN/AUS Schalters 41 und der Abschaltung der Vcc-Spannung über einen Leistungskontakt zum Steuergerät 1 ein. Das Steuerungsmittel 60 kann mit einem oder mehreren Energiespeicherkomponenten (z. B. Kondensatoren) ausgestaltet sein, die verwendet werden, um den Leistungskontakt für eine vorbestimmte Zeit eingeschaltet zu halten.

Alternativ kann statt oder ergänzend zum Steuerungsmittel 60 auch der Haltemechanismus mittels Software implementiert und über den Controller 70 ausgeführt werden. Insbesondere kann der Controller 70 verwendet werden, um den Zustand des Schalters 41 zu überwachen. So kann der Controller 70 die Auslöserfreigabe überwachen und die Bremsung einleiten, obwohl die Abschaltbedingung bereits aktiviert wurde.

Konventionell wurde das elektronische Bremsen für BLDC-Motoren dadurch realisiert, dass entweder der obere oder der untere MOSFETS eingeschaltet wurde, um den Bremsstrom zu führen. Die Unterbrechung dieses Ansatzes erfolgte beispielsweise durch kontinuierliches Einschalten aller drei Low-Side-MOSFETs auf einmal, während alle drei High-Side-MOSFETs während des gesamten Bremszyklus ausgeschaltet bleiben, oder umgekehrt.

Gemäß dem Konzept der Erfindung wird ein verbesserter Bremsenalgorithmus bereitgestellt, bei dem der Bremsstrom über die Treiberbausteine T1 und T2 zwischen den High-Side-FETs 12, 13, 14 und den entsprechenden Low-Side-FETs 15, 16, 17 aufgeteilt wird, um alle verfügbaren MOSFETs zur Stromabsenkung zu nutzen. In dieser Ausführung schalten die High- und Low-Side-MOSFETs 12, 13, 14, 15, 16, 17 abwechselnd EIN und AUS und teilen sich so die Stromlast, die für das elektronische Bremsen benötigt wird. Denkbar ist aber auch ein anderer Algorithmus zum Ansteuern der Leistungsschalter beim Bremsen.

In der Fig. 3 ist eine schematischer Verlauf beim Abschalten (einmal gemäß Stand der Technik und einmal gemäß der vorliegenden Erfindung) dargestellt. In der oberen Kurve a (Stand der Technik) erfolgt das Bremsen in der Zeitspanne t1 bis t2 (während der entsprechenden Kommutierungsphase). Die Kurve b repräsentiert die Abschaltzeitspanne. Der Bremsvorgang startet somit bei t1, während erst beim Erreichen des Zeitpunkts t3 das Abschalten erfolgt. Die Abschaltzeit beginnt demnach bei t1 und endet bei t3.

Bei der erfindungsgemäßen Lösung (Kurve c) sind diese Phasen aufeinanderfolgend. In der Zeitspanne t1 bis t2 erfolgt der Bremsvorgang und dann schließt sich (wie mit den Pfeilen angedeutet) der Abschaltvorgang an, der beim Zeitpunkt t4 endet. Damit ist die Vorrichtung gemäß der Erfindung länger aktiv. Diese Phase wird auch als "shut-down" Phase bezeichnet.

## Patentansprüche

1. Steuereinheit (1) für ein motorbetriebenes Gerät (10) aufweisend:
einen bürstenlosen Motor (20), eine Stromversorgung (30) und eine Bedieneinheit (40), die von einem Nutzer aktivierbar ist,
wobei die Steuereinheit (1) ausgebildet ist, eine Kommutierung des Motors (20) durch mehrere an die Stromversorgung angeschlossene Leistungsschalter (12, 13, 14, 15, 16, 17) zu steuern und eine elektronische Bremsung des Motors zu initiieren,
**dadurch gekennzeichnet, daß**
die Steuereinheit (1) ausgebildet ist, den Motor (20) während einer jeweils Drehzahl-abhängigen Zeitdauer to nach dem Erkennen einer Drehzahl des Motors (20) oder eines definierten Zeitpunktes mittels eines Positionssensors (50) zu deaktivieren und den Motor (20) bis dahin in einem aktiven eingeschalteten Betriebszustand zu halten,
wobei ein Steuerungsmittel (60) vorgesehen ist, das ausgebildet ist, ein Ausschalten der Steuereinheit (1) nach Erreichen eines Stillstands des Motors (20) automatisiert zu initiieren,
wobei ferner ein Speicher vorgesehen ist, in dem Sollwerte t_{D,SOLL} für die Drehzahl-abhängigen Zeitdauern t_{D} to für eine Vielzahl von Motordrehzahlen über dem gesamten Motordrehzahlbereich hinterlegt sind.

2. Steuereinheit (1) gemäß Anspruch 1, **dadurch gekennzeichnet, dass** der Positionssensor (50) einen Hall-Sensor darstellt, der an die Steuereinheit ein Signal, welches indikativ für die Drehzahl des Motors (20) ist, überträgt.

3. Steuereinheit (1) gemäß Anspruch 1, **dadurch gekennzeichnet, dass** die Steuereinheit (1) so konfiguriert ist, dass nach Ablauf der Zeitdauer t_{D} die Ist-Drehzahl erfasst wird und geprüft wird, ob diese größer Null ist und sich demnach der Motor (20) noch dreht und für diesen Fall der im Speicher für diese Drehzahl hinterlegte Sollwert t_{D,SOLL} um einen vorbestimmten Faktor erhöht wird.

4. Steuereinheit (1) gemäß einem der vorhergehenden Ansprüche, **dadurch gekennzeichnet, dass** die mehreren Leistungsschalter (12, 13, 14, 15, 16, 17) mehrere High-Side-Schalter aufweisen, die mit entsprechend mehreren Low-Side-Schaltern verbunden sind, und die Steuereinheit (1) für ein abwechselndes EIN- und AUS-Schalten der mehreren Low-Side-Schalter und der mehreren High-Side-Schalter zum Bremsen des Motors (20) konfiguriert ist.

5. Steuereinheit (1) gemäß einem der vorhergehenden Ansprüche, **dadurch gekennzeichnet, dass** die Bedieneinheit einen EIN/AUS-Schalter (41) aufweist, der sowohl manuell bedienbar ist als auch mittels der Steuereinheit (1) bei Eintreten einer Abschaltbedingung betätigbar ist.

6. Steuereinheit (1) gemäß Anspruch 5, **dadurch gekennzeichnet, dass** zwischen der Stromversorgung (30) und der Steuereinheit (1) ein Stromkontakt vorgesehen ist, der ausgebildet ist, wenn der EIN/AUS-Schalter (41) ausgeschaltet wurde, die Bereitstellung von Strom zur Steuereinheit (1) während der Drehzahl-abhängigen Zeitdauer to zu gewährleisten.

7. Steuereinheit (1) gemäß Anspruch 5, **dadurch gekennzeichnet, dass** die Steuerung so konfiguriert ist, dass diese unmittelbar bei dem Ausschalten des EIN/AUS-Schalters (41) die dann aktuelle Drehzahl erfasst und daraus die Verzögerung des Ausschaltens über die Zeitdauer t_{D} gesteuert wird und die Steuereinheit (1) erst dann ausgeschaltet ist, wenn nach dem Ablauf der Zeitdauer t_{D} der Stillstand des Motors (20) detektiert wird.

8. Steuereinheit (1) gemäß einem der vorhergehenden Ansprüche, **dadurch gekennzeichnet, dass** diese einen Energiespeicher, vorzugsweise einen Kondensator aufweist, in dem eine bestimmte elektrische Energiemenge gespeichert ist, die ausreicht, die Energieversorgung für eine bestimmte Zeitspanne bereitzustellen.

9. Steuereinheit (1) gemäß Anspruch 7, **dadurch gekennzeichnet, dass** die Stromversorgung (30) der Steuerung nach dem Ausschalten des EIN/AUS-Schalters (41) mittels einer vorbestimmten Entladezeit mittels der gespeicherten Energie im Kondensator gesteuert wird, in der eine bestimmte elektrische Energiemenge gespeichert ist, die ausreicht die Energieversorgung für eine bestimmte Zeitspanne bereit zu stellen.

10. Verfahren zum Steuern eines Motors (20) eines Gerätes (10) insbesondere mit einer Steuereinheit (1) gemäß einem der Ansprüche 1 bis 9 mit den folgenden Schritten:
a) Initiieren eines Abschaltbefehls des Gerätes (10);
b) Erfassen der Drehzahl des Motors (20) mit Drehzahlerfassungsmitteln (50) zu dem Zeitpunkt des Initiierens des Abschaltbefehls des Gerätes (10);
**gekennzeichnet durch**
c) Ermitteln einer in einem Speicher hinterlegten Haltedauer, nämlich einer für die ermittelte Drehzahl hinterlegte Zeitspanne to
d) Steuern eines Bremsvorgangs des Motors (20) während der Zeitspannen to mittels Kommutieren des Motors (20) über die Steuereinheit (1),
e) Aufrechterhalten des aktiven eingeschalteten Betriebszustandes des Motors (20) während dieser Zeitspanne t_{D}
f) Abschalten der Steuereinheit (1) erst nach Erreichen des Stillstands des Motors (20).

11. Verfahren nach Anspruch 10, **dadurch gekennzeichnet, dass** vor dem Schritt f) die Drehzahl erneut erfasst wird und der Schritt f) erst dann erfolgt, wenn die Drehzahl Null ist und damit feststeht, dass der Stillstand des Motors erreicht ist und andernfalls die Schritte b) bis e) wiederholt, insbesondere sukzessive wiederholt werden, solange bis der Stillstand des Motors detektiert wurde.

## Claims

1. A control unit (1) for a motorized device (10), having:
a brushless motor (20), a current supply (30), and an operating unit (40) which is activatable by a user,
wherein the control unit (1) is adapted to control commutation of the motor (20) by multiple circuit breakers (12, 13, 14, 15, 16, 17) connected to the current supply, and to initiate electronic deceleration of the motor,
**characterized in that**
the control unit (1) is adapted to deactivate the motor (20) for a respective speed-dependent time period to upon detecting a speed of the motor (20) or a defined point in time by means of a position sensor (50), and to keep the motor (20) in an active switched-on operating state in the meantime,
wherein a control means (60) is provided, which is adapted to initiate switch-off of the control unit (1) in an automated manner upon a standstill of the motor (20) being reached,
further wherein a memory is provided, in which target values t_{D,TARGET} for the speed-dependent time periods to are stored for a plurality of motor speeds across the entire motor speed range.

2. The control unit (1) according to claim 1, **characterized in that** the position sensor (50) is a Hall effect sensor which transmits a signal to the control unit, which is indicative of the speed for the motor (20).

3. The control unit (1) according to claim 1, **characterized in that** the control unit (1) is configured such that, once the time period to has elapsed, the actual speed is sensed and it is checked whether the latter is greater than zero and the motor (20) is therefore still spinning, in which case the target value t_{D,TARGET} stored in the memory is increased by a pre-determined factor.

4. The control unit (1) according to any one of the preceding claims, **characterized in that** the multiple circuit breakers (12, 13, 14, 15, 16, 17) have multiple high-side switches, correspondingly connected to multiple low-side switches, and **in that** the control unit (1) is configured to alternately switch the multiple low-side switches and the multiple high-side switches ON and OFF to decelerate the motor (20).

5. The control unit (1) according to any one of the preceding claims, **characterized in that** the operating unit has an ON/OFF switch (41) which is both able to be operated manually and by means of the control unit (1) when a switch-off condition occurs.

6. The control unit (1) according to claim 5, **characterized in that**, between the current supply (30) and the control unit (1), a current contact is provided, which is adapted to, when the ON/OFF switch (41) has been switched off, ensure provision of current to the control unit (1) for the speed-depended time period t_{D}.

7. The control unit (1) according to claim 5, **characterized in that** the control is configured such that, when the ON/OFF switch (41) is switched off, it immediately senses the then current speed, and the delay in switch-off over the time period t_{D} is controlled based thereon and the control unit (1) is only switched off when the standstill of the motor (20) is detected once the time period to has elapsed.

8. The control unit (1) according to any one of the preceding claims, **characterized in that** it has an energy accumulator, preferably a capacitor, in which a specific amount of electrical energy is stored, which is sufficient to provide the energy supply for a specific time span.

9. The control unit (1) according to claim 7, **characterized in that** the current supply (30) of the control after switching off the ON/OFF switch (41) is controlled by means of a pre-determined discharge time by means of the energy accumulated in the capacitor in which a specific amount of electrical energy is stored which is sufficient to provide the energy supply for a specific time span.

10. A method for controlling a motor (20) of a device (10), in particular with a control unit (1) according to any one of claims 1 to 9, having the following steps:
a) initiating a switch-off command of the device (10);
b) sensing the speed of the motor (20) using speed sensing means (50) at the point in time of initiating the switch-off command of the device (10);
**characterized by**
c) determining a holding period stored in a memory, namely a time span to stored for the speed determined,
d) controlling a deceleration operation of the motor (20) for the time spans to by means of commutating the motor (20) via the control unit (1),
e) maintaining the active switched-on operating state of the motor (20) for the time span to,
f) switching the control unit (1) off only upon the standstill of the motor (20) having been reached.

11. The method according to claim 10, **characterized in that**, prior to step f), the speed is sensed anew and step f) is only performed if the speed is zero and it is therefore sure that the standstill of the motor is reached, and otherwise, steps b) to e) are repeated, in particular repeated successively, until the standstill of the motor has been detected.

## Revendications

1. Unité de commande (1) pour un appareil motorisé (10) présentant :
un moteur sans balais (20), une alimentation électrique (30) et une unité d'actionnement (40) qui peut être activée par un utilisateur,
dans laquelle l'unité de commande (1) est réalisée pour commander une commutation du moteur (20) par plusieurs disjoncteurs (12, 13, 14, 15, 16, 17) connectés à l'alimentation électrique et pour déclencher un freinage électronique du moteur,
**caractérisée en ce que** l'unité de commande (1) est réalisée pour désactiver le moteur (20) pendant une durée t_{D} dépendant de la vitesse de rotation respectivement après l'identification d'une vitesse de rotation du moteur (20) ou d'un instant défini au moyen d'un capteur de position (50), et pour maintenir le moteur (20) jusque là dans un état de fonctionnement en marche actif,
dans laquelle un moyen de commande (60) est prévu qui est réalisé pour déclencher de manière automatisée une mise hors tension de l'unité de commande (1) après qu'un arrêt du moteur (20) a été atteint,
dans laquelle en outre une mémoire est prévue dans laquelle des valeurs de consigne t_{D,SOLL} pour les durées t_{D} dépendant de la vitesse de rotation sont mémorisées pour une pluralité de vitesses de rotation de moteur sur toute la plage de vitesses de rotation de moteur.

2. Unité de commande (1) selon la revendication 1, **caractérisée en ce que** le capteur de position (50) représente un capteur à effet Hall qui transmet à l'unité de commande un signal qui indique la vitesse de rotation du moteur (20).

3. Unité de commande (1) selon la revendication 1, **caractérisée en ce que** l'unité de commande (1) est configurée de telle sorte qu'après expiration de la durée to, la vitesse de rotation réelle est détectée, et il est vérifié si elle est supérieure à zéro et le moteur (20) tourne donc encore, et dans ce cas, la valeur de consigne t_{D,SOLL} mémorisée dans la mémoire pour cette vitesse de rotation est augmentée d'un facteur prédéterminé.

4. Unité de commande (1) selon l'une quelconque des revendications précédentes, **caractérisée en ce que** les plusieurs disjoncteurs (12, 13, 14, 15, 16, 17) présentent plusieurs commutateurs côté haut qui sont reliés de manière correspondante à plusieurs commutateurs côté bas, et l'unité de commande (1) est configurée pour mettre en et hors tension les plusieurs commutateurs côté bas et les plusieurs commutateurs côté haut en alternance pour freiner le moteur (20).

5. Unité de commande (1) selon l'une quelconque des revendications précédentes, **caractérisée en ce que** l'unité d'actionnement présente un commutateur marche/arrêt (41) qui peut être actionné aussi bien manuellement qu'au moyen de l'unité de commande (1) lorsqu'une condition de mise hors tension se produit.

6. Unité de commande (1) selon la revendication 5, **caractérisée en ce qu'**entre l'alimentation électrique (30) et l'unité de commande (1) un contact de courant est prévu qui est réalisé, lorsque le commutateur marche/arrêt (41) a été mis hors tension, pour garantir la fourniture du courant à l'unité de commande (1) pendant la durée t_{D} dépendant de la vitesse de rotation.

7. Unité de commande (1) selon la revendication 5, **caractérisée en ce que** la commande est configurée de telle sorte qu'elle détecte immédiatement à la mise hors tension du commutateur marche/arrêt (41) la vitesse de rotation actuelle à ce moment-là, et à partir de celle-ci le retard de la mise hors tension est commandé pendant la durée to, et l'unité de commande (1) n'est mise hors tension que si l'arrêt du moteur (20) est détecté après écoulement de la durée t_{D}.

8. Unité de commande (1) selon l'une quelconque des revendications précédentes, **caractérisée en ce qu'**elle présente un accumulateur d'énergie, de préférence un condensateur, dans lequel une certaine quantité d'énergie électrique est accumulée qui est suffisante pour fournir l'alimentation en énergie pour une période de temps déterminée.

9. Unité de commande (1) selon la revendication 7, **caractérisée en ce que** l'alimentation électrique (30) de la commande est commandée après la mise hors tension du commutateur marche/arrêt (41) au moyen d'un temps de décharge prédéterminé au moyen de l'énergie accumulée dans le condensateur, dans lequel une quantité d'énergie électrique déterminée est accumulée qui est suffisante pour fournir l'alimentation en énergie pendant une période de temps déterminée.

10. Procédé permettant de commander un moteur (20) d'un appareil (10) comprenant en particulier une unité de commande (1) selon l'une quelconque des revendications 1 à 9, comprenant les étapes suivantes consistant à :
a) déclencher une instruction de mise hors tension de l'appareil (10) ;
b) détecter la vitesse de rotation du moteur (20) par des moyens de détection de vitesse de rotation (50) à l'instant du déclenchement de l'instruction de mise hors tension de l'appareil (10) ;
**caractérisé par** les étapes consistant à :
c) déterminer une durée de maintien mémorisée dans une mémoire, notamment une période de temps t_{D} mémorisée pour la vitesse de rotation déterminée,
d) commander un processus de freinage du moteur (20) pendant les périodes de temps t_{D} au moyen d'une commutation du moteur (20) par l'intermédiaire de l'unité de commande (1),
e) maintenir un état de fonctionnement en marche actif du moteur (20) pendant cette période de temps to,
f) mettre hors tension l'unité de commande (1) seulement après que l'arrêt du moteur (20) est atteint.

11. Procédé selon la revendication 10, **caractérisé en ce que** la vitesse de rotation est détectée à nouveau avant l'étape f), et l'étape f) n'est effectuée que si la vitesse de rotation est égale à zéro et qu'il est donc sûr que l'arrêt du moteur est atteint, et sinon les étapes b) à e) sont répétées, en particulier répétées successivement, jusqu'à ce que l'arrêt du moteur ait été détecté.
